# EUROPÄISCHE PATENTSCHRIFT

(11) **EP 3 812 559 B1**
(45) Veröffentlichungstag und Bekanntmachung des Hinweises auf die Patenterteilung: **06.12.2023**
(21) Anmeldenummer: 20200283.8
(22) Anmeldetag: 06.10.2020
(51) Int. Cl.: F02B 29/04, F02B 19/10, F02B 19/12, F02B 39/08, F02M 26/00, F02M 26/06, F02M 26/08, F02M 26/20, F02B 37/04, F02B 39/10

(54) **SPÜLFLUID-VERSORGUNG EINER AKTIVEN VORKAMMER EINES AUFGELADENEN OTTOMOTORS IN KOMBINATION MIT EINER TURBOKÜHLUNG**
FLUSHING FLUID FEEDING OF AN ACTIVE PRECOMBUSTION CHAMBER FOR A TURBOCHARGED SPARK IGNITED ENGINE IN COMBINATION WITH A TURBO-COOLING
ALIMENTATION D'UN FLUIDE DE BALAYAGE DANS UNE PRÉCHAMBRE DE COMBUSTION D'UN MOTEUR SURALIMENTÉ À ALLUMAGE COMMANDÉ EN COMBINAISON AVEC UN REFROIDISSEMENT PAR DÉTENTE

(30) Priorität: 21.10.2019 DE 102019128334
(43) Veröffentlichungstag der Anmeldung: 28.04.2021
(73) Patentinhaber: VOLKSWAGEN AG, 38440 Wolfsburg (DE)
(72) Erfinder: MICHELS, Karsten, 39130 Magdeburg (DE)
(74) Vertreter: Gulde & Partner

(56) Entgegenhaltungen:
- EP-A1- 0 655 550
- EP-A1- 3 808 951
- EP-A2- 0 192 219
- EP-B1- 0 192 219
- EP-B1- 2 948 667
- AT-U1- 13 417
- DE-A1-102016 112 537
- DE-B3-102016 113 307
- US-A1- 2020 158 005

## Beschreibung

Die Erfindung betrifft eine Brennkraftmaschine, umfassend mindestens einen Zylinder, wobei der mindestens eine Zylinder eine Hauptbrennkammer zur Verbrennung eines Kraftstoff/Luft-Gemischs oder eines Kraftstoff/Luft/Abgas-Gemischs und eine mit der Hauptbrennkammer über mindestens einen Überströmkanal fluidseitig verbundene gespülte Vorkammer und einen Abgasturbolader aufweist.

Die Druckschrift EP 2 948 667 B1 beschreibt ein Verfahren zum Betreiben eines Mehrzylinderkolbenmotors. Vorgesehen ist, dass in dem Motor jeder Zylinder mit einem Hubkolben und einer Vorverbrennungskammer versehen ist und das Verfahren die Schritte des Einführens von gasförmigem Kraftstoff in einen Ansaugkanal des Motors, Einspritzen von flüssigem Pilotkraftstoff in die Vorverbrennungskammer, Zünden des flüssigen Pilotkraftstoffs mittels Verdichtung durch den Kolben und Nutzen der Verbrennung des flüssigen Pilotkraftstoffs, um den gasförmigen Kraftstoff zu entzünden, aufweist, wobei das Abgas vor dem Einspritzen des flüssigen Pilotkraftstoffs in die Vorverbrennungskammer eingeführt wird. Bei diesem Verfahren wird das Abgas abgekühlt, bevor es in die Vorverbrennungskammer eingeführt wird, und die Ansaugluft wird mit dem Abgas vor dem Einführen der Mischung aus dem Abgas und der Ansaugluft in die Vorverbrennungskammer gemischt.

Eine weiterer Ottomotor und ein zugehöriges Verfahren der gattungsgemäßen Art zur Versorgung einer Hauptbrennkammer mit verdichteter Verbrennungsluft und einer Vorkammer mit einem Kraftstoff/Luft-Gemisch ist aus der Druckschrift DE 10 2016 112 537 A1 bekannt. Vorgesehen ist hier, dass der Ottomotor mindestens einen Zylinder umfasst, wobei der mindestens eine Zylinder eine Hauptbrennkammer zur Verbrennung eines Brenngas-Luft-Gemischs und eine mit der Hauptbrennkammer über einen Überströmkanal gekoppelte, gespülte Vorkammer umfasst. Der Ottomotor umfasst ferner mindestens einen Abgasturbolader, der eine Turbine zur Entspannung von den mindestens einen Zylinder verlassendem Abgas und einen Verdichter zur Verdichtung von den mindestens einen Zylinder zuzuführender Luft aufweist, wobei mehrere Luftpfade für die den mindestens einen Zylinder zuzuführende Luft vorhanden sind, wobei über einen ersten Luftpfad mit einem ersten Verdichter zumindest Luft verdichtbar und der Hauptbrennkammer des mindestens einen Zylinders zuführbar ist, und wobei über einen zweiten Luftpfad mit einem zweiten Verdichter ein Brenngas-Luft-Gemisch verdichtbar und der Vorkammer des mindestens einen jeden Zylinders zuführbar ist.

Es wird ferner auf die Druckschriften DE 10 2016 113 307 B3, EP 0 655 550 A1, EP 0 192 219, AT 13 417 U1 und US 2020/158005 A1 verwiesen.

Der Erfindung liegt nun die Aufgabe zugrunde, einen neuartigen gattungsgemäßen Ottomotor und ein neues Verfahren zum Betreiben des Ottomotors zu schaffen.

Diese Aufgabe wird durch eine ottomotorische Brennkraftmaschine und ein zugehöriges Verfahren zum Betrieb der Brennkraftmaschine gelöst.

Ausgangspunkt der Erfindung ist eine Brennkraftmaschine, umfassend mindestens einen Zylinder, wobei der mindestens eine Zylinder eine Hauptbrennkammer zur Verbrennung eines Kraftstoff/Luft-Gemischs oder eines Kraftstoff/Luft/Abgas-Gemischs und eine mit der Hauptbrennkammer über mindestens einen Überströmkanal fluidseitig verbundene gespülte Vorkammer aufweist, und mindestens einen Abgasturbolader, der eine Turbine zur Entspannung von den mindestens einen Zylinder verlassendem Abgas und einen Verdichter zur Verdichtung von dem mindestens einen Zylinder zuzuführender Frischluft oder eines Frischluft/Abgas-Gemischs als verdichtete Ladeluft aufweist. Es ist vorgesehen, dass in einem Ladeluftstrang stromab des Verdichters zur Versorgung der Brennkammer ein Brennkammer-Ladeluftstrang und zur Versorgung der Vorkammer ein an einer Entnahmestelle abzweigender Vorkammer-Spülstrang ausgebildet ist, wobei stromab des Verdichters des Abgasturboladers stromauf der Entnahmestelle zumindest ein Ladeluftkühler zur Kühlung der Ladeluft im Ladeluftstrang angeordnet ist.

Erfindungsgemäß ist vorgesehen, dass stromab der Entnahmestelle im Brennkammer-Ladeluftstrang eine Luftturbine angeordnet ist, in der die Frischluft oder auch ein Frischluft/Abgas-Gemisch, die im Abgasturbolader höher verdichtet wird als für die Füllung der Zylinder der Brennkammer nötig ist, expandiert.

Bevorzugt ist gemäß einer ersten Ausführungsform vorgesehen, dass vor der Entnahmestelle ein erster Ladeluftkühler und ein weiterer Verdichter einer Luftturbinen-Verdichter-Einheit sowie ein weiterer Ladeluftkühler angeordnet sind, wobei die Luftturbine stromab der Entnahmestelle im Brennkammer-Ladeluftstrang angeordnet ist.

Bevorzugt ist in einer zweiten Ausführungsform vorgesehen, dass stromauf der Entnahmestelle ein erster Ladeluftkühler und stromab der Entnahmestelle im Brennkammer-Ladeluftstrang eine Luftturbine angeordnet sind.

In einer dritten Ausführungsform ist bevorzugt vorgesehen, dass stromauf der Entnahmestelle ein erster Ladeluftkühler und stromab der Entnahmestelle eine Luftturbinen-Verdichter-Einheit angeordnet sind, wobei die Luftturbine stromab der Entnahmestelle im Brennkammer-Ladeluftstrang und der Verdichter stromab der Entnahmestelle im abzweigenden Vorkammer-Spülstrang angeordnet sind.

Die Brennkraftmaschine ist bevorzugt dadurch gekennzeichnet, dass stromab der Entnahmestelle im Vorkammer-Spülstrang ein Rückschlagventil oder ein Rückschlagventil und ein Pufferbehälter angeordnet ist/sind.

In einer Ausführungsvariante ist vorgesehen, dass gemäß der zweiten und dritten Ausführungsform stromab der Entnahmestelle im Vorkammer-Spülstrang ein zweiter Ladeluftkühler angeordnet ist.

In weiterer Ausgestaltung der Erfindung ist vorgesehen, dass die Brennkraftmaschine im Vorkammer-Spülstrang eine Zuführstelle einer Kraftstoffzuleitung zur Zuführung von Kraftstoff zu dem Spülfluid angeordnet ist, wobei im Vorkammer-Spülstrang an der Zuführstelle der Kraftstoffzuleitung entweder Frischluft oder ein Frischluft/Abgas-Gemisch anliegt, der oder dem Kraftstoff zuführbar ist.

Mittels einer der möglichen Ausführungsformen ist ein Verfahren zum Betreiben einer Brennkraftmaschine durchführbar, wobei die Brennkraftmaschine mindestens einen Zylinder umfasst, wobei der mindestens eine Zylinder eine Hauptbrennkammer zur Verbrennung eines Kraftstoff/Luft-Gemischs oder eines Kraftstoff/Luft/Abgas-Gemischs und eine mit der Hauptbrennkammer über mindestens einen Überströmkanal fluidseitig verbundene gespülte Vorkammer aufweist, und die mindestens einen Abgasturbolader umfasst, der eine Turbine zur Entspannung von den mindestens einen Zylinder verlassendem Abgas und einen Verdichter zur Verdichtung von dem mindestens einen Zylinder zuzuführender Frischluft oder eines Frischluft/Abgas-Gemischs als verdichtete Ladeluft aufweist, wobei vorgesehen ist, dass in einem Ladeluftstrang stromab des Verdichters zur Versorgung der Brennkammer ein Brennkammer-Ladeluftstrang und zur Versorgung der Vorkammer ein an einer Entnahmestelle abzweigender Vorkammer-Spülstrang ausgebildet ist, so dass der Brennkammer eine gekühlte erste Ladeluftteilmenge und der Vorkammer eine gekühlte zweite Ladeluftteilmenge als Spülfluid mit optionaler Zumischung von Kraftstoff zugeführt wird.

Erfindungsgemäß ist vorgesehen, dass ein gegenüber einem Brennkammerdruck höherer Vorkammerdruck in der Vorkammer durch eine Turbokühlung erzeugt wird, wobei die Frischluft oder ein Frischluft/Abgas-Gemisch im Abgasturbolader höher verdichtet wird als für die Füllung der Zylinder der Brennkammer nötig ist, wonach nachfolgend die Frischluft oder auch das Frischluft/Abgas-Gemisch durch mindestens einen Ladeluftkühler gekühlt wird, wobei die Frischluft oder das Frischluft/Abgas-Gemisch als zweite Ladeluftteilmenge, vom Druckniveau des höheren Vorkammerdrucks ausgehend, an der Entnahmestelle zur Versorgung der Vorkammer mit verdichtetem und gekühltem Spülfluid abgenommen wird, während die erste Ladeluftteilmenge zur Versorgung der Brennkammer über eine Luftturbine stromab der Entnahmestelle im Brennkammer-Ladeluftstrang expandiert wird, wodurch die Temperatur und der Druck der Frischluft oder des Frischluft/Abgas-Gemischs gegenüber der Frischluft oder des Frischluft/Abgas-Gemischs im Vorkammer-Spülstrang verringert wird.

Verfahrensgemäß ist bevorzugt in allen Ausführungsformen vorgesehen, dass die gekühlte erste Ladeluftteilmenge zur Versorgung der Brennkammer in einer Luftturbine expandiert wird.

Bevorzugt ist ferner verfahrensgemäß in der dritten Ausführungsformen vorgesehen, dass die gekühlte zweite Ladeluftteilmenge zur Versorgung der Vorkammer mit Spülfluid, dem optional Kraftstoff zugemischt wird, zuvor in dem weiteren Verdichter nachverdichtet wird.

In einer Ausgestaltung des Verfahrens wird dem Verdichter des Abgasturboladers aus einem stromauf angeordneten Frischluftstrang Frischluft zugeführt, so dass dem Brennkammer-Ladeluftstrang zur Versorgung der Brennkammer und dem Vorkammer-Spülstrang zur Spülung der Vorkammer Frischluft zugeführt wird.

In einer anderen Ausgestaltung des Verfahrensschrittes wird dem Verdichter des Abgasturboladers aus einem stromauf angeordneten Frischluftstrang ein Frischluft/Abgas-Gemisch zugeführt, da der Frischluftstrang stromauf des Verdichters mit einem Abgasrückführungsstrang eines Abgasstrangs verbunden ist, so dass dem Brennkammer-Ladeluftstrang zur Versorgung der Brennkammer und dem Vorkammer-Spülstrang zur Spülung der Vorkammer ein Frischluft/Abgas-Gemisch zugeführt wird.

Das Verfahren ist ferner dadurch gekennzeichnet, dass der verdichteten Ladeluft, insbesondere der Frischluft oder dem Frischluft/Abgas-Gemisch im Vorkammer-Spülstrang stromab der Entnahmestelle optional bedarfsabhängig Kraftstoff zugeführt wird, so dass die mindestens eine Vorkammer mit einem Kraftstoff/Frischluft-Gemisch oder einem Kraftstoff/Luft/Abgas-Gemisch als Spülfluid gespült wird.

Die Erfindung wird nachfolgend anhand der zugehörigen Zeichnungen erläutert. Es zeigt:
- Figur 1: eine schematische Darstellung eines erfindungsgemäßen aufgeladenen Ottomotors mit einer Versorgung einer aktiven Vorkammer - in einer ersten Ausführungsform - mit einer Ladeluftentnahme nach einem Abgasturbolader in Kombination mit einer Turbokühlung;
- Figur 2: eine schematische Darstellung eines erfindungsgemäßen aufgeladenen Ottomotors mit einer Versorgung einer aktiven Vorkammer - in einer zweiten Ausführungsform - mit einer Ladeluftentnahme nach einem Abgasturbolader in Kombination mit einer Turbokühlung;
- Figur 3: eine schematische Darstellung eines erfindungsgemäßen aufgeladenen Ottomotors mit einer Versorgung einer aktiven Vorkammer - in einer dritten Ausführungsform - mit einer Ladeluftentnahme nach einem Abgasturbolader in Kombination mit einer Turbokühlung.

Die hier vorliegende Erfindung betrifft eine ottomotorische Brennkraftmaschine 1, insbesondere einen mit einem Kraftstoff K, insbesondere mit einem Gas oder einem flüssigen Ottokraftstoff betriebenen Ottomotor sowie ein Verfahren zum Betreiben eines solchen Ottomotors.

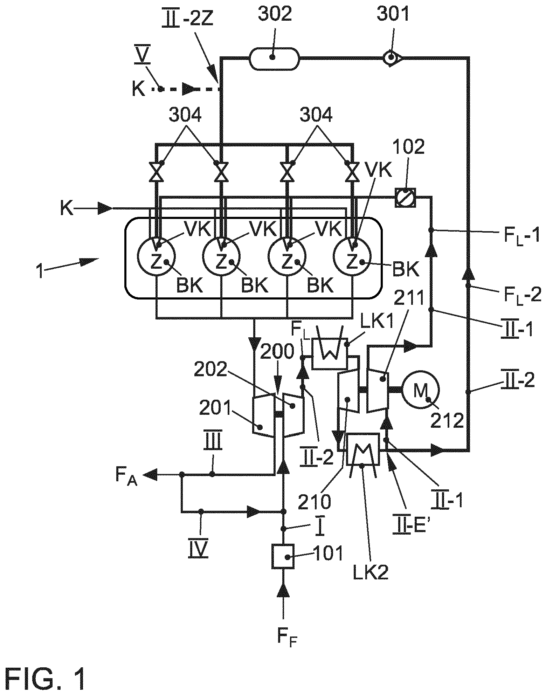

Die Figuren 1 bis 3 zeigen jeweils ein Schema des erfindungsgemäßen Ottomotors 1, der mehrere Zylinder Z umfasst. Jeder der Zylinder Z verfügt über eine Hauptbrennkammer BK sowie eine Vorkammer VK, wobei die jeweilige Vorkammer VK mit der Hauptbrennkammer BK des jeweiligen Zylinders Z über mindestens einen Überströmkanal (nicht dargestellt) gekoppelt ist.

In den Zylindern Z des Ottomotors 1, nämlich im Bereich der Hauptbrennkammern BK der Zylinder Z, wird ein Gemisch aus Kraftstoff K und Frischluft F_{F} oder ein Kraftstoff/Frischluft/Abgas-Gemisch K/F_{F}/F_{A} verbrannt, wobei hierbei entstehendes Abgas Fa, über einen Abgasturbolader 200, insbesondere über eine Turbine 201 des Abgasturboladers 200, und im Ausführungsbeispiel in einem Abgasstrang III über Katalysatoren, insbesondere über einen Vor-Katalysator (nicht dargestellt) und einen Haupt-Katalysator (nicht dargestellt), abgeführt wird.

Hierbei wird im Bereich der Turbine 201 des Abgasturboladers 200 gewonnene Energie zum Verdichten von Verbrennungsluft, insbesondere Frischluft F_{F} oder einem Frischluft/Abgas-Gemisch F_{F}/F_{A} in einem Verdichter 202 genutzt, die dann als verdichtete Ladeluft F_{L} in Ladeluftsträngen II-1, II-2 den Hauptbrennkammern BK des Ottomotors 1 und den Vorkammern VK des Ottomotors 1 zugeführt wird.

Es handelt sich bei den in den Figuren 1 bis 3 gezeigten Ausführungsformen um einen Ottomotor 1 mit fremdgezündeter innerer Gemischbildung, das heißt, der Frischluft F_{F} oder dem Frischluft/Abgas-Gemisch F_{F}/F_{A} wird durch Direkteinspritzung Kraftstoff K, durch Einspritzung flüssiger Kraftstoff oder durch Einblasung gasförmiger Kraftstoff über Einspritz-/Einblasventile (nicht dargestellt ) in der Hauptbrennkammer BK zugeführt und mittels einer Zündeinrichtung (nicht dargestellt) gezündet.

Das beschriebene Verfahren kann aber auch bei äußerer Gemischbildung analog eingesetzt werden. Das heißt, die Darstellung und die nachfolgende Beschreibung erfolgt anhand einer von mehreren Ausführungsvarianten der Gemischbildung.

Stromauf der Turbine 201 ist im Ausführungsbeispiel ein Abgasrückführungsstrang IV ausgebildet, der in üblicher Weise einen Abgasrückführungs-Kühler (nicht dargestellt) und eine Abgasrückführungs-Klappe (nicht dargestellt) umfasst, wobei der Abgasrückführungsstrang IV mit dem darin geführten Abgas F_{A} stromab eines Luftfilters 101 des Frischluftstrangs I stromauf des Verdichters 202 in den Frischluftstrang I eingebunden ist.

Der erfindungsgemäße Ottomotor 1 verfügt erfindungsgemäß über zwei Teil-Ladeluftstränge II-1 und II-2, über die Ladeluft FL-1 und FL-2 zu den Hauptbrennkammern BK und den Vorkammern VK geliefert wird, vergleiche Figur 1, die stromab des Verdichters 202 ausgehend von dem gemeinsamen Ladeluftstrang II ausgebildet sind, worauf nachfolgend noch eingegangen wird.

Der erste Teil-Ladeluftstrang II-1 liefert ausgehend von dem gemeinsamen Ladeluftstrang II verdichtete Ladeluft F_{L}-1 vom Verdichter 202 zu den Hauptbrennkammern BK der jeweiligen Zylinder Z.

Der zweite Teil-Ladeluftstrang II-2 liefert ausgehend von dem gemeinsamen Ladeluftstrang II verdichtete Ladeluft F_{L}-2 vom Verdichter 202 zu den Vorkammern der jeweiligen Zylinder Z.

Mit anderen Worten, der Ladeluftstrang II weist eine Entnahmestelle II-E (stromauf der Drosselklappe 102) auf, an der verdichtete Ladeluft F_{L} mit dem vor der Drosselklappe 102 anliegenden Ladedruck als Spülfluid für die Vorkammern VK der jeweiligen Zylinder Z entnommen wird, weshalb der zweite Teil-Ladeluftstrang II-2 den Vorkammer-Spülstrang für die Vorkammern VK und der erste Teil-Ladeluftstrang II-1 für die Hauptbrennkammern BK bildet.

Als Ladeluft F_{L} wird Frischluft F_{F} oder ein Frischluft/Abgas-Gemisch F_{F}/F_{A} angesehen.

Als Spülfluid wird Frischluft F_{F} oder ein Frischluft/Abgas-Gemisch F_{F}/F_{A} oder bei Zuführung Kraftstoff K ein Kraftstoff/Frischluft F_{F}-Gemisch K/F_{F} oder ein Kraftstoff/Frischluft/Abgas-Gemisch k/ F_{F}/F_{A} angesehen.

Dem Vorkammer-Spülstrang II-2 ist hinter der Entnahmestelle II-E ein Rückschlagventil 301, bevorzugt ein Pufferbehälter 302 sowie nach entsprechender Aufteilung des Vorkammer-Spülstrangs II-2 in einzelne Spülfluidleitungen je Zylinder Taktventile 304 zugordnet, über die zu vorgebbaren Zeitpunkten eine vorgebbare Menge Spülfluid F_{L}-2 über den Vorkammer-Spülstrang II-2 zu den Vorkammern VK der jeweiligen Zylinder Z geführt wird.

Es liegt entweder Frischluft F_{F} oder ein Frischluft/Abgas-Gemisch F_{F}/F_{A} oder bei zusätzlicher Zuführung von Kraftstoff K ein Kraftstoff/Frischluft F_{F}-Gemisch K/F_{F} oder ein Kraftstoff/Frischluft/Abgas-Gemisch K/ F_{F}/F_{A} vor, so dass den Vorkammern VK der jeweiligen Zylinder Z zu vorgebbaren Zeitpunkten eine vorgebbare Menge Spülfluid zugeführt werden kann.

Erfindungsgemäß wird für die Spülung der aktiven Vorkammern VK mit Ladeluft F_{L}-2, insbesondere mit Frischluft F_{F} oder auch dem Frischluft/Abgas-Gemisch F_{F}/F_{A} oder dem Kraftstoff/Frischluft/Abgas-Gemisch K/F_{F}/F_{A} für das zuzuführende Spülfluid ein Druckniveau über dem Ladedruck des Verdichters 202 der Ladeluft F_{L}-1 im Bereich der Hauptbrennkammer BK benötigt, wie nachfolgend anhand der drei in den Figuren 1 bis 3 dargestellten Ausführungsformen noch erläutert wird.

Generell gilt erfindungsgemäß, dass für die Spülung einer aktiven Vorkammer VK mit dem jeweils zuzuführenden Spülfluid (F_{F}; F_{F}/F_{A}; K/F_{F}; K/ F_{F}/F_{A}) ein Druckniveau über dem Saugrohrdruck im Brennkammer-Ladeluftstrang II-1 vor der Hauptbrennkammer BK benötigt wird.

Der gegenüber dem Saugrohrdruck (analog Brennkammerdruck) höhere Vorkammerdruck in der Vorkammer VK wird erfindungsgemäß in Kombination mit einer Turbokühlung erzeugt.

Bei der Turbokühlung wird die Frischluft F_{F} oder auch ein Frischluft/Abgas-Gemisch F_{F}/F_{A} für den Ottomotor 1 zunächst im Abgasturbolader 201, 202 höher verdichtet als für die Füllung der Zylinder Z der Hauptbrennkammer BK nötig ist und nachfolgend wird die Frischluft F_{F} oder auch das Frischluft/Abgas-Gemisch F_{F}/F_{A} durch mindestens einen Ladeluftkühler LK1, LK2 gekühlt.

Von diesem durch den Abgasturbolader 201, 202 erzeugten höchsten Druckniveau ausgehend, wird die Ladeluft F_{L}-2, insbesondere die Frischluft F_{F} oder auch das Frischluft/Abgas-Gemisch F_{F}/F_{A} an einer Entnahmestelle (II-E', II-E", II-E‴) zur Versorgung der Vorkammern VK mit verdichtetem und gekühltem Spülfluid (F_{F}; F_{F}/F_{A}; K/F_{F}; K/ F_{F}/F_{A}) abgenommen.

Die nicht an einer Entnahmestelle (II-E', II-E", II-E‴) für die Vorkammern VK abgenommene Ladeluft F_{L}-1, der so genannte gekühlte Hauptluftstrom zur Versorgung der Hauptbrennkammern BK, wird anschließend über eine Luftturbine 211 stromab der Entnahmestelle (II-E', II-E", II-E‴) im Ladeluftstrang II-1 (vergleiche Figuren 1 bis 3) expandiert, wodurch die Temperatur und der Druck der Frischluft F_{F} oder des Frischluft/Abgas-Gemischs F_{F}/F_{A} gegenüber der Frischluft F_{F} oder des Frischluft/Abgas-Gemischs F_{F}/F_{A} im Vorkammer-Spülstrang II-2 noch weiter verringert wird.

Der Gesamtaufbau ist somit in Kombination mit einer externen Abgasrückführung eAGR [externe Abgasrückführung] möglich und sinnvoll, wie zuvor erläutert wurde und nachfolgend erläutert wird, so dass als Ladeluft FL-1, FL-2 und als Spülfluid jeweils ein Frischluft/Abgas-Gemisch F_{F}/F_{A} eingesetzt werden kann.

Die Figur 1 zeigt eine schematische Darstellung eines erfindungsgemäß aufgeladenen Ottomotors 1 mit einer Spülfluid-Versorgung einer aktiven Vorkammer VK - in einer ersten Ausführungsform - mit einer Ladeluftentnahme (Frischluft F_{F} oder des Frischluft/Abgas-Gemischs F_{F}/F_{A}) nach einem Abgasturbolader 201, 202 in Kombination mit einer Turbokühlung LK1, LK2.

Hauptmerkmale der ersten Ausführungsform gemäß Figur 1:
Gekennzeichnet durch
a) einen Ottomotor 1 mit aktiven Vorkammern VK, wobei Ladeluft zur Versorgung der Vorkammern VK der Ladeluftstrecke stromab eines Verdichters 202 des Turboladers 201, 202 und eines ersten Ladeluftkühlers LK1 an der Entnahmestelle II-E' entnommen wird, wobei
b) die Ladeluftstrecke stromab des ersten Ladeluftkühlers LK1 eine Verdichter/Luftturbinen-Einheit 210, 211 umfasst, wobei ein zweiter Ladeluftkühler LK2 zwischen dem Verdichter 210 und der Luftturbine 211 angeordnet ist, und wobei die Ladeluftentnahme F_{L}-2 (der Frischluft F_{F} oder des Frischluft/Abgas-Gemischs F_{F}/F_{A}) für die Vorkammern VK zwischen dem zweiten Ladeluftkühler LK2 und der Luftturbine 211 an der Entnahmestelle II-E' erfolgt, und
c) Zuführung von Kraftstoff K in die Ladeluft F_{L}-2, so dass aus der Frischluft F_{F} oder dem Frischluft/Abgas-Gemisch F_{F}/F_{A} als Spülfluid nach der Kraftstoffzuführung ein Kraftstoff/Frischluft F_{F}-Gemisch K/F_{F} oder ein Kraftstoff/Frischluft/Abgas-Gemisch K/F_{F}/F_{A} als Spülfluid zur Spülung der Vorkammern VK gebildet wird.

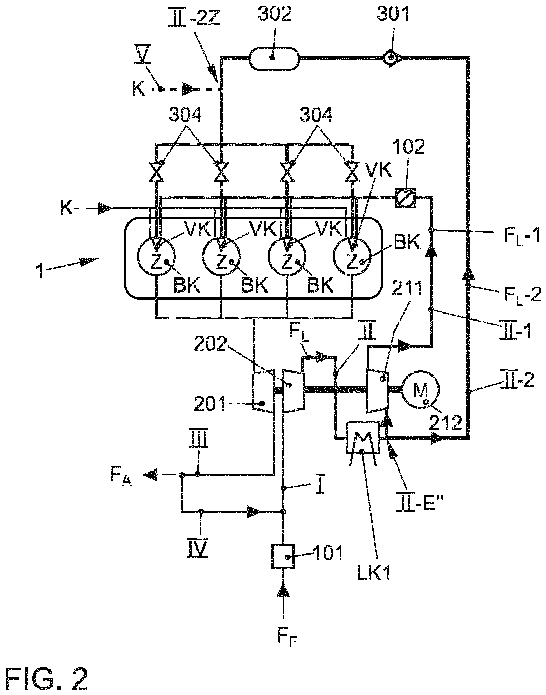

Die Figur 2 zeigt eine schematische Darstellung eines erfindungsgemäßen aufgeladenen Ottomotors 1 mit einer Spülfluid-Versorgung einer aktiven Vorkammer VK - in einer zweiten Ausführungsform - mit einer Ladeluftentnahme Frischluft F_{F} oder des Frischluft/Abgas-Gemischs F_{F}/F_{A}) nach einem Abgasturbolader 201, 202 in Kombination mit einer Turbokühlung LK1.

Hauptmerkmale der zweiten Ausführungsform gemäß Figur 2:
Gekennzeichnet durch
a) einen Ottomotor 1 mit aktiven Vorkammern VK, wobei die Ladeluft zur Versorgung der Vorkammern VK der Ladeluftstrecke stromab eines Verdichters 202 des Turboladers 201, 202 und des ersten Ladeluftkühlers LK1 an der Entnahmestelle II-E" entnommen wird, wobei
b) die Ladeluftstrecke stromab des ersten Ladeluftkühlers LK eine Luftturbine 211 umfasst, wobei die Luftturbine 211 und der Turbolader 201, 202 auf einer gemeinsamen Welle liegen, wobei die Ladeluftentnahme (Frischluft F_{F} oder des Frischluft/Abgas-Gemischs F_{F}/F_{A}) für die Vorkammern VK zwischen dem ersten Ladeluftkühler LK1 und der Luftturbine 211 erfolgt, und
c) Zuführung von Kraftstoff K in die Ladeluft F_{L}-2, so dass aus der Frischluft F_{F} oder dem Frischluft/Abgas-Gemisch F_{F}/F_{A} als Spülfluid nach der Kraftstoffzuführung ein Kraftstoff/Frischluft F_{F}-Gemisch K/F_{F} oder ein Kraftstoff/Frischluft/Abgas-Gemisch K/F_{F}/F_{A} als Spülfluid zur Spülung der Vorkammern VK gebildet wird.

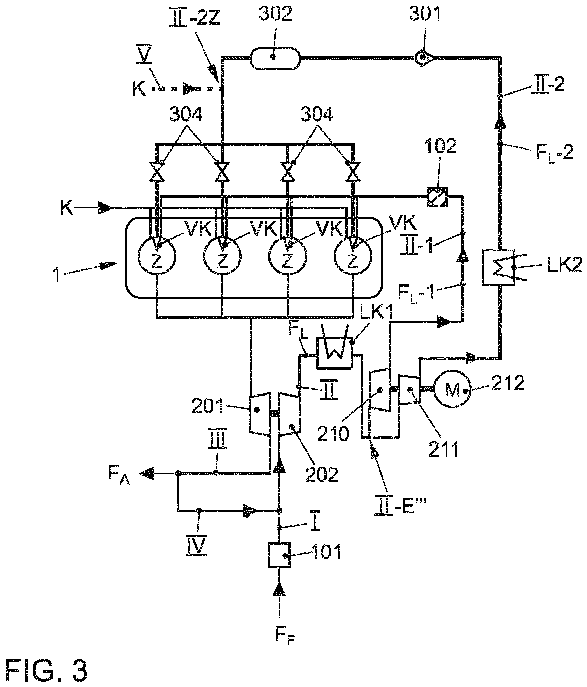

Die Figur 3 zeigt eine schematische Darstellung eines erfindungsgemäßen aufgeladenen Ottomotors 1 mit einer Spülfluid-Versorgung einer aktiven Vorkammer VK - in einer dritten Ausführungsform - mit einer Ladeluftentnahme Frischluft F_{F} oder des Frischluft/Abgas-Gemischs F_{F}/F_{A}) nach einem Abgasturbolader 201, 202 in Kombination mit einer Turbokühlung LK1.

Hauptmerkmale der dritten Ausführungsform gemäß Figur 3:
Gekennzeichnet durch
a) einen Ottomotor 1 mit aktiven Vorkammern VK, wobei die Ladeluft zur Versorgung der Vorkammern VK der Ladeluftstrecke stromab eines Verdichters 202 des Turboladers 201, 202 und des ersten Ladeluftkühlers LK1 an der Entnahmestelle II-E" entnommen wird, wobei
b) die Ladeluftstrecke stromab des ersten Ladeluftkühlers LK eine Verdichter/Luftturbinen-Einheit 210, 211 umfasst, wobei die Verdichter/Luftturbinen-Einheit 210, 211 und der Turbolader 201, 202 nicht auf einer gemeinsamen Welle liegen, wobei die Ladeluftentnahme (Frischluft F_{F} oder des Frischluft/Abgas-Gemischs F_{F}/F_{A}) für die Vorkammern VK stromab des Verdichters 202 des Abgasturboladers 201, 202 und des ersten Ladeluftkühlers LK1 an der Entnahmestelle II-E‴ erfolgt, dass vorgebbare xMassen%, insbesondere zirka 97 % der Ladeluftmasse F_{L}-1 für die Hauptbrennkammer BK in der Luftturbine 211 der Verdichter/Luftturbinen-Einheit 210, 211 entspannt werden und vorgebbare xMassen%, insbesondere zirka 3 % der Ladeluftmasse F_{L}-2 (Spülfluidmasse) im Verdichter 211 der Verdichter/Luftturbinen-Einheit 210, 211 zur Versorgung der Vorkammern VK nachverdichtet wird.
c) Zuführung von Kraftstoff K in die Ladeluft F_{L}-2, so dass aus der Frischluft F_{F} oder dem Frischluft/Abgas-Gemisch F_{F}/F_{A} als Spülfluid nach der Kraftstoffzuführung ein Kraftstoff/Frischluft F_{F}-Gemisch K/F_{F} oder ein Kraftstoff/Frischluft/Abgas-Gemisch K/F_{F}/F_{A} als Spülfluid zur Spülung der Vorkammern VK gebildet wird.

Die Ausführungsformen gemäß den Figuren 1 bis 3 zusammenfassend ist vorgesehen, dass bei der Spülung einer aktiven Vorkammer VK mit dem Spülfluid (F_{F}; F_{F}/F_{A}; K/F_{F}; K/ F_{F}/F_{A}) ein Druckniveau über dem Saugrohrdruck benötigt wird. Vorgeschlagen wird bevorzugt ein Druckniveau bis zirka zum doppelten Saugrohrdruck.

Die Erzeugung des Drucks erfolgt erfindungsgemäß durch mindestens einen Verdichter 202, 210 in Kombination mit einer Turbokühlung.

Bei der Turbokühlung wird Frischluft F_{F} oder ein Frischluft/Abgas-Gemisch F_{F}/F_{A} für die Hauptbrennkammer BK des Ottomotors zuerst höher verdichtet als für die Füllung der Zylinder Z nötig ist und anschließend durch mindestens einen Ladeluftkühler LK1 oder zwei Ladeluftkühler LK2 gekühlt.

Von diesem Druckniveau hinter dem mindestens einen Ladeluftkühler LK1 oder den zwei Ladeluftkühlern LK2 ausgehend, dem dort anliegenden höchsten Druck in der Ladeluftstrecke, wird das Spülfluid für die Vorkammer VK abgenommen.

Der Hauptluftstrom zur Hauptbrennkammer BK (erster Ladeluftteilstrom II-1) an Frischluft F_{F} oder Frischluft/Abgas-Gemisch F_{F}/F_{A} wird anschließend über eine Luftturbine 211 expandiert, wodurch die Temperatur der Ladeluft F_{L}-1 neben dem Druckabfall nochmal verringert wird, wodurch schließlich der höchste Druck in der Ladeluftstrecke, von dem das Spülfluid für die Vorkammer VK abgenommen wird, höher liegt als des Hauptluftstroms im Saugrohr, respektive in den Hauptbrennkammern BK.

Der Gesamtaufbau ist mit einer externen Abgasrückführung eAGR möglich, da die Vorkammerzündung in den Vorkammern VK besonders geeignet ist, verdünnte Ladungen zu entflammen. Diese Ausführungsform eignet sich besonders für mager (mit Luftüberschuss) betriebene Motoren.

Mögliche Ausführungsformen sind anhand der Figuren erläutert. Bevorzugt ist vorgesehen, dass eine Elektromaschine 212 an der Luftturbinen-Verdichter-Einheit 202, 211, 212 (Figur 1) oder 202, 211, 212 (Figur 2) oder 211, 201, 212 auf einer gemeinsamen Welle angeordnet ist.

Die Elektromaschine 212 kann in allen Ausführungsformen optional als E-Booster eingesetzt werden, vor allem transient oder auch über kürzere Zeitspannen stationär. In Betriebspunkten mit Momentenüberschuss kann die Elektromaschine 212 bevorzugt auch als Generator verwendet werden.

Die erste Ausführungsform betrifft die Turbokühlung der Ladeluft F_{L} mit zwei getrennten Turbinen-Verdichtereinheiten 201, 202 und 211, 212, 213, vergleiche Figur 1, mit zweifacher Verdichtung der Ladeluft F_{L} und zweifacher Turbokühlung der Ladeluft F_{L} stromauf der Entnahmestelle II-E'.

Die zweite Ausführungsform betrifft die Turbokühlung der Ladeluft F_{L} mit allen Maschinen 201, 202, 211, 212 auf einer Welle, vergleiche Figur 2, mit einfacher Ladeluft F_{L} stromauf der Entnahmestelle II-E". Bei dieser Ausführungsform muss der Verdichter 202 des Abgasturboladers 201, 202 im Vergleich zu den anderen beiden (erste und dritte Ausführungsform) den höchsten Ladedruck erzeugen, da eine Nachverdichtung über den Verdichter 210 einer zusätzlichen Turbinen-Verdichtereinheit 211, 210 entfällt.

Die dritte Ausführungsform betrifft die Turbokühlung der Ladeluft F_{L} mit zwei getrennten Turbinen-Verdichtereinheiten 201, 202 und 211, 212, 213, vergleiche Figur 1, mit zweifacher Verdichtung der Ladeluft F_{L} und einfacher Turbokühlung der Ladeluft F_{L} stromauf der Entnahmestelle II-E‴. Bei der dritten Ausführungsform verdichtet der ATL-Verdichter 202 den gesamten Ladeluftmassenstrom nur etwas höher als nötig. Der Hauptmassenstrom (zirka 97 %) wird über die Luftturbine 211 entspannt und nur zirka 3 % des Spülfluidmassenstroms über den zweiten Verdichter 211 auf das höhere vorgebbare Druckniveau verdichtet. Aufgrund des Massenstromverhältnisses zirka 97 % über die Luftturbine 211 und zirka 3 % über die zweite Verdichterstufe 210 im Vorkammer-Spülstrang II-2 ist der Turbokühlungseffekt bei dieser Ausführungsform geringer.

### Bezugszeichenliste

- 1: Brennkraftmaschine
- 101: Luftfilter
- 102: Drosselklappe
- Z: Zylinder
- BK: Hauptbrennkammer
- VK: Vorkammer
- 200: Abgasturbolader
- 201: Turbine
- 202: Verdichter
- 210: Verdichter
- 211: Luftturbine
- 212: Elektromaschine
- 301: Rückschlagventil
- 302: Pufferbehälter
- 304: Taktventile
- LK1: erster Ladeluftkühler
- LK2: zweiter Ladeluftkühler
- I: Frischluftstrang
- II: Ladeluftstrang
- II-E': Entnahmestelle (erste Ausführungsform)
- II-E": Entnahmestelle (zweite Ausführungsform)
- II-E‴: Entnahmestelle (dritte Ausführungsform)
- II-1: erster Teil-Ladeluftstrang, Brennkammer-Ladeluftstrang
- II-2: zweiter Teil-Ladeluftstrang, Vorkammer-Spülstrang
- II-2Z: Zuführstelle
- III: Abgasstrang
- IV: Abgasrückführung
- V: Kraftstoffzuleitung
- F_{F}: Frischluft/Verbrennungsluft
- F_{L}: Ladeluft vor Entnahmestelle II-E
- F_{L}-1: Ladeluft in II-1
- F_{L}-2: Ladeluft/Spülfluid in II-2
- F_{L}-2/K: Ladeluft-Kraftstoffgemisch
- F_{A}: Abgas
- F_{F}/F_{A}: Frischluft/Abgas-Gemisch
- K: Kraftstoff
- K/F_{F}: Kraftstoff-Frischluft-Gemisch
- K/F_{F}/F_{A}: Kraftstoff/Luft/Abgas-Gemisch

## Patentansprüche

1. Brennkraftmaschine (1), umfassend mindestens einen Zylinder (Z), wobei der mindestens eine Zylinder (Z) eine Hauptbrennkammer (BK) zur Verbrennung eines Kraftstoff/Luft-Gemischs (K/F_{L}) oder eines Kraftstoff/Luft/Abgas-Gemischs (K/F_{F}/F_{A}) und eine mit der Hauptbrennkammer (BK) über mindestens einen Überströmkanal fluidseitig verbundene gespülte Vorkammer (VK) aufweist, und
mindestens einen Abgasturbolader (200), der eine Turbine (201) zur Entspannung von den mindestens einen Zylinder (Z) verlassendem Abgas (F_{A}) und einen Verdichter (202) zur Verdichtung von dem mindestens einen Zylinder (Z) zuzuführender Frischluft (F_{F}) oder eines Frischluft/Abgas-Gemischs (F_{F}/F_{A}) als verdichtete Ladeluft (F_{L}) aufweist, wobei in einem Ladeluftstrang (II) stromab des Verdichters (202) zur Versorgung der Hauptbrennkammer (BK) ein Brennkammer-Ladeluftstrang (II-1) und zur Versorgung der Vorkammer (VK; II-2) ein an einer Entnahmestelle (II-E', II-E", II-E‴) abzweigender Vorkammer-Spülstrang (II-2) ausgebildet ist, wobei stromab des Verdichters (202) des Abgasturboladers (200) stromauf der Entnahmestelle (II-E', II-E", II-E‴) zumindest ein Ladeluftkühler (LK1, LK2) zur Kühlung der Ladeluft (FL) im Ladeluftstrang (II) angeordnet ist,
**dadurch gekennzeichnet, dass**
stromab der Entnahmestelle (II-E', II-E", II-E‴) im Brennkammer-Ladeluftstrang (II-1) eine Luftturbine (211) angeordnet ist, in der die Frischluft (F_{F}) oder auch ein Frischluft/Abgas-Gemisch (F_{F}/F_{A}), die im Abgasturbolader (201, 202) höher verdichtet wird als für die Füllung der Zylinder (Z) der Hauptbrennkammer (BK) nötig ist, expandiert.

2. Brennkraftmaschine (1) nach Anspruch 1, **dadurch gekennzeichnet, dass** vor der Entnahmestelle (II-E') ein erster Ladeluftkühler (LK1) und ein weiterer Verdichter (210) einer Luftturbinen-Verdichter-Einheit (211, 210) sowie ein weiterer Ladeluftkühler (LK2) angeordnet sind, wobei die Luftturbine (211) stromab der Entnahmestelle (II-E') im Brennkammer-Ladeluftstrang (II-1) angeordnet ist.

3. Brennkraftmaschine (1) nach Anspruch 1, **dadurch gekennzeichnet, dass** stromauf der Entnahmestelle (II-E") ein erster Ladeluftkühler (LK1) und stromab der Entnahmestelle (II-E") im Brennkammer-Ladeluftstrang (II-1) eine Luftturbine (211) angeordnet sind.

4. Brennkraftmaschine (1) nach Anspruch 1, **dadurch gekennzeichnet, dass** stromauf der Entnahmestelle (II-E‴) ein erster Ladeluftkühler (LK1) und stromab der Entnahmestelle (II-E") eine Luftturbinen-Verdichter-Einheit (201, 211) angeordnet sind, wobei die Luftturbine (211) stromab der Entnahmestelle (II-E‴) im Brennkammer-Ladeluftstrang (II-1) und der Verdichter (210) stromab der Entnahmestelle (II-E') im abzweigenden Vorkammer-Spülstrang (II-2) angeordnet sind.

5. Brennkraftmaschine (1) nach Anspruch 1, **dadurch gekennzeichnet, dass** stromab der Entnahmestelle (II-E', II-E", II-E‴) im Vorkammer-Spülstrang (II-2) ein Rückschlagventil (301) oder ein Rückschlagventil (301) und ein Pufferbehälter (302) angeordnet ist/sind.

6. Brennkraftmaschine (1) nach Anspruch 3 und 5 oder 4 und 5, **dadurch gekennzeichnet, dass** stromab der Entnahmestelle (II-E", II-E‴) im Vorkammer-Spülstrang (II-2) ein zweiter Ladeluftkühler (LK2) angeordnet ist.

7. Brennkraftmaschine (1) nach Anspruch 1, **dadurch gekennzeichnet, dass** im Vorkammer-Spülstrang (II-2) eine Zuführstelle (II-2Z) einer Kraftstoffzuleitung (V) zur Zuführung von Kraftstoff (K) zu dem Spülfluid (F_{L}-2) angeordnet ist, wobei im Vorkammer-Spülstrang (II-2) an der Zuführstelle (II-2Z) der Kraftstoffzuleitung (V) Frischluft (F_{F}) oder ein Frischluft/Abgas-Gemischs (F_{F}/F_{A}) anliegt.

8. Verfahren zum Betreiben einer Brennkraftmaschine (1), die mindestens einen Zylinder (Z) umfasst, wobei der mindestens eine Zylinder (Z) eine Hauptbrennkammer (BK) zur Verbrennung eines Kraftstoff/Luft-Gemischs (K/F_{L}) oder eines Kraftstoff/Luft/Abgas-Gemischs (K/F_{F}/F_{A}) und eine mit der Hauptbrennkammer (BK) über mindestens einen Überströmkanal fluidseitig verbundene gespülte Vorkammer aufweist, und die mindestens einen Abgasturbolader (200) umfasst, der eine Turbine (201) zur Entspannung von den mindestens einen Zylinder (Z) verlassendem Abgas (F_{A}) und einen Verdichter (202) zur Verdichtung von dem mindestens einen Zylinder (Z) zuzuführender Frischluft (F_{F}) oder eines Frischluft/Abgas-Gemischs (F_{F}/F_{A}) als verdichtete Ladeluft (F_{L}) aufweist, wobei in einem Ladeluftstrang (II) stromab des Verdichters (202) zur Versorgung der Hauptbrennkammer (BK) ein Brennkammer-Ladeluftstrang (II-1) und zur Versorgung der Vorkammer (VK; II-2) ein an einer Entnahmestelle (II-E', II-E", II-E‴) abzweigender Vorkammer-Spülstrang (II-2) ausgebildet ist, so dass der Hauptbrennkammer (BK) eine gekühlte erste Ladeluftteilmenge (F_{L}-1) und der Vorkammer (VK) eine gekühlte zweite Ladeluftteilmenge (F_{L}-2) zugeführt wird, **dadurch gekennzeichnet, dass**
ein gegenüber einem Brennkammerdruck höherer Vorkammerdruck in der Vorkammer (VK) durch eine Turbokühlung erzeugt wird, wobei die Frischluft (FF) oder ein Frischluft/Abgas-Gemisch (F_{F}/F_{A}) im Abgasturbolader (201, 202) höher verdichtet wird als für die Füllung der Zylinder (Z) der Hauptbrennkammer (BK) nötig ist, wonach nachfolgend die Frischluft (F_{F}) oder auch das Frischluft/Abgas-Gemisch (F_{F}/F_{A}) durch mindestens einen Ladeluftkühler (LK1, LK2) gekühlt wird, wobei die Frischluft (F_{F}) oder das Frischluft/Abgas-Gemisch (F_{F}/F_{A}) als zweite Ladeluftteilmenge (F_{L}-2), vom Druckniveau des höheren Vorkammerdrucks ausgehend, an der Entnahmestelle (II-E', II-E", II-E‴) zur Versorgung der Vorkammer (VK) mit verdichtetem und gekühltem Spülfluid (F_{F}; F_{F}/F_{A}; K/F_{F}; K/ F_{F}/F_{A}) abgenommen wird, während die erste Ladeluftteilmenge (F_{L}-1) zur Versorgung der Hauptbrennkammer (BK) über eine Luftturbine (211) stromab der Entnahmestelle (II-E', II-E", II-E‴) im Brennkammer- Ladeluftstrang (II-1) expandiert wird, wodurch die Temperatur und der Druck der Frischluft (F_{F}) oder des Frischluft/Abgas-Gemischs (F_{F}/F_{A}) gegenüber der Frischluft (F_{F}) oder des Frischluft/Abgas-Gemischs (F_{F}/F_{A}) im zweiten Vorkammer-Spülstrang (II-2) verringert wird.

9. Verfahren nach Anspruch 8, **dadurch gekennzeichnet, dass** die gekühlte erste Ladeluftteilmenge (F_{L}-1) zur Versorgung der Hauptbrennkammer (BK) in einer Luftturbine (211) expandiert wird.

10. Verfahren nach Anspruch 8, **dadurch gekennzeichnet, dass** die gekühlte zweite Ladeluftteilmenge (FL-2) zur Versorgung der Vorkammer (VK; II-2) in einem weiteren Verdichter (211) nachverdichtet wird.

11. Verfahren nach Anspruch 10, **dadurch gekennzeichnet, dass** dem Verdichter (202) des Abgasturboladers (210, 202) aus einem stromauf angeordneten Frischluftstrang (I) Frischluft (F_{F}) zugeführt wird, so dass dem Brennkammer-Ladeluftstrang (II-1) zur Versorgung der Hauptbrennkammer (BK) und dem Vorkammer-Spülstrang (II-2) zur Spülung der Vorkammer (VK) Frischluft (F_{F}) zugeführt wird.

12. Verfahren nach Anspruch 10, **dadurch gekennzeichnet, dass** dem Verdichter (202) aus einem stromauf angeordneten Frischluftstrang (I) ein Frischluft/Abgas-Gemisch zugeführt wird, da der Frischluftstrang (I) stromauf des Verdichters (202) mit einem Abgasrückführungsstrang (IV) eines Abgasstrangs (III) verbunden ist, so dass dem Brennkammer-Ladeluftstrang (II-1) zur Versorgung der Hauptbrennkammer (BK) und dem Vorkammer-Spülstrang (II-2) zur Spülung der Vorkammer (VK) ein Frischluft/Abgas-Gemisch (F_{F}/F_{A}) zugeführt wird.

13. Verfahren nach mindestens einem der Ansprüche 11 oder 12, **dadurch gekennzeichnet, dass** der verdichteten Ladeluft (F_{L}), insbesondere der Frischluft (F_{F}) oder dem Frischluft/Abgas-Gemisch (F_{F}/F_{A}) im Vorkammer-Spülstrang (II-2) stromab der Entnahmestelle (II-E', II-E", II-E‴) bedarfsabhängig Kraftstoff (K) zugeführt wird, so dass die mindestens eine Vorkammer (VK) mit einem Kraftstoff/Frischluft-Gemisch (K/F_{F}) oder einem Kraftstoff/Luft/Abgas-Gemisch (K/F_{F}/F_{A}) gespült wird.

## Claims

1. Internal combustion engine (1) comprising at least one cylinder (Z), the at least one cylinder (Z) having a main combustion chamber (BK) for the combustion of a fuel/air mixture (K/F_{L}) or a fuel/air/exhaust gas mixture (K/F_{F}/F_{A}) and a flushed prechamber (VK) connected on the fluid side to the main combustion chamber (BK) via at least one transfer port, and comprising
at least one exhaust gas turbocharger (200) which has a turbine (201) for the expansion of the exhaust gas (F_{A}) leaving the at least one cylinder (Z) and a compressor (202) for compressing fresh air (F_{F}) or a fresh air/exhaust gas mixture (F_{F}/F_{A}) to be supplied to the at least one cylinder (Z) as compressed charge air (F_{L}), a combustion chamber charge air line (II-1) for supplying the main combustion chamber (BK) and a prechamber flushing line (II-2) branching off at an extraction point (II-E', II-E", II-E‴) for supplying the prechamber (VK; II-2) being formed in a charge air line (II) downstream of the compressor (202), at least one charge air cooler (LK1, LK2) for cooling the charge air (FL) being arranged in the charge air line (II) downstream of the compressor (202) of the exhaust gas turbocharger (200) and upstream of the extraction point (II-E', II-E", II-E‴),
**characterized in that**
an air turbine (211) is arranged downstream of the extraction point (II-E', II-E", II-E‴) in the combustion chamber charge air line (II-1), in which air turbine (211) the fresh air (F_{F}) or also a fresh air/exhaust gas mixture (F_{F}/F_{A}), which is compressed in the exhaust gas turbocharger (201, 202) to a greater extent than is necessary for filling the cylinders (Z) of the main combustion chamber (BK), expands.

2. Internal combustion engine (1) according to claim 1, **characterized in that** a first charge air cooler (LK1) and a further compressor (210) of an air turbine compressor unit (211, 210) and a further charge air cooler (LK2) are arranged upstream of the extraction point (II-E'), the air turbine (211) being arranged downstream of the extraction point (II-E') in the combustion chamber charge air line (II-1).

3. Internal combustion engine (1) according to claim 1, **characterized in that** a first charge air cooler (LK1) is arranged upstream of the extraction point (II-E") and an air turbine (211) is arranged downstream of the extraction point (II-E") in the combustion chamber charge air line (II-1).

4. Internal combustion engine (1) according to claim 1, **characterized in that** a first charge air cooler (LK1) is arranged upstream of the extraction point (II-E‴) and an air turbine compressor unit (201, 211) is arranged downstream of the extraction point (II-E"), the air turbine (211) being arranged downstream of the extraction point (II-E‴) in the combustion chamber charge air line (II-1) and the compressor (210) being arranged downstream of the extraction point (II-E') in the branching prechamber flushing line (II-2).

5. Internal combustion engine (1) according to claim 1, **characterized in that** a check valve (301) or a check valve (301) and a buffer tank (302) is/are arranged downstream of the extraction point (II-E', II-E", II-E‴) in the prechamber flushing line (II-2).

6. Internal combustion engine (1) according to claims 3 and 5 or 4 and 5, **characterized in that** a second charge air cooler (LK2) is arranged downstream of the extraction point (II-E", II-E") in the prechamber flushing line (II-2).

7. Internal combustion engine (1) according to claim 1, **characterized in that** a feed point (II-2Z) of a fuel feed line (V) for supplying fuel (K) to the flushing fluid (F_{L}-2) is arranged in the prechamber flushing line (II-2), fresh air (F_{F}) or a fresh air/exhaust gas mixture (F_{F}/F_{A}) being present in the prechamber flushing line (II-2) at the feed point (II-2Z) of the fuel feed line (V).

8. Method for operating an internal combustion engine (1) comprising at least one cylinder (Z), the at least one cylinder (Z) having a main combustion chamber (BK) for the combustion of a fuel/air mixture (K/F_{L}) or a fuel/air/exhaust gas mixture (K/F_{F}/F_{A}) and a flushed prechamber connected on the fluid side to the main combustion chamber (BK) via at least one transfer port, and comprising at least one exhaust gas turbocharger (200) which has a turbine (201) for the expansion of exhaust gas (F_{A}) leaving the at least one cylinder (Z) and a compressor (202) for compressing fresh air (F_{F}) or a fresh air/exhaust gas mixture (F_{F}/F_{A}) to be supplied to the at least one cylinder (Z) as compressed charge air (F_{L}), a combustion chamber charge air line (II-1) for supplying the main combustion chamber (BK) and a prechamber flushing line (II-2) branching off at an extraction point (II-E', II-E", II-E‴) for supplying the prechamber (VK; II-2) being formed in a charge air line (II) downstream of the compressor (202), so that a cooled first partial charge air amount (F_{L}-1) is supplied to the main combustion chamber (BK) and a cooled second partial charge air amount (F_{L}-2) is supplied to the prechamber (VK), **characterized in that**
a prechamber pressure that is higher than a combustion chamber pressure is generated in the prechamber (VK) by turbo-cooling, wherein the fresh air (F_{F}) or a fresh air/exhaust gas mixture (F_{F}/F_{A}) is compressed in the exhaust gas turbocharger (201, 202) to greater extent than is necessary for filling the cylinders (Z) of the main combustion chamber (BK), after which the fresh air (F_{F}) or also the fresh air/exhaust gas mixture (F_{F}/F_{A}) is subsequently cooled by at least one charge air cooler (LK1, LK2), the fresh air (F_{F}) or the fresh air/exhaust gas mixture (F_{F}/F_{A}) as a second partial charge air amount (F_{L}-2), starting from the pressure level of the higher prechamber pressure, being removed at the extraction point (II-E', II-E", II-Eʺʺ) in order to supply the prechamber (VK) with compressed and cooled flushing fluid (F_{F}; F_{F}/F_{A}; K/F_{F}; K/F_{F}/F_{A}), while the first partial charge air amount (F_{L}-1) for supplying the main combustion chamber (BK) is expanded by an air turbine (211) downstream of the extraction point (II-E', II-E", II-E‴) in the combustion chamber charge air line (II-1), as a result of which the temperature and the pressure of the fresh air (F_{F}) or of the fresh air/exhaust gas mixture (F_{F}/F_{A}) is reduced compared to the fresh air (F_{F}) or the fresh air/exhaust gas mixture (F_{F}/F_{A}) in the second prechamber flushing line (II-2).

9. Method according to claim 8, **characterized in that** the cooled first partial charge air amount (F_{L}-1) for supplying the main combustion chamber (BK) is expanded in an air turbine (211).

10. Method according to claim 8, **characterized in that** the cooled second partial charge air amount (FL-2) for supplying the prechamber (VK; II-2) is recompressed in a further compressor (211).

11. Method according to claim 10, **characterized in that** fresh air (F_{F}) is supplied to the compressor (202) of the exhaust gas turbocharger (210, 202) from an upstream fresh air line (I), so that fresh air (F_{F}) is supplied to the combustion chamber charge air line (II-1) for supplying the main combustion chamber (BK) and to the combustion chamber flushing line (II-2) for flushing the prechamber (VK).

12. Method according to claim 10, **characterized in that** a fresh air/exhaust gas mixture is supplied to the compressor (202) from an upstream fresh air line (I), since the fresh air line (I) is connected to an exhaust gas recirculation line (IV) of an exhaust gas line (III) upstream of the compressor (202), so that a fresh air/exhaust gas mixture (F_{F}/F_{A}) is supplied to the combustion chamber charge air line (II-1) for supplying the main combustion chamber (BK) and to the prechamber flushing line (II-2) for flushing the prechamber (VK).

13. Method according to at least one of claims 11 or 12, **characterized in that** fuel (K) is supplied to the compressed charge air (F_{L}), in particular the fresh air (F_{F}) or the fresh air/exhaust gas mixture (F_{F}/F_{A}), downstream of the extraction point (II-E', II-E", II-E‴) in the prechamber flushing line (II-2) as required, so that the at least one prechamber (VK) is flushed with a fuel/fresh air mixture (K/F_{F}) or a fuel/air/exhaust gas mixture (K/F_{F}/F_{A}).

## Revendications

1. Moteur à combustion (1) comprenant au moins un cylindre (Z), dans lequel l'au moins un cylindre (Z) présente une chambre de combustion principale (BK) pour la combustion d'un mélange carburant/air (K/F_{L}) ou d'un mélange carburant/air/gaz d'échappement (K/F_{F}/F_{A}) et une préchambre (VK) balayée et liée de manière fluidique à la chambre de combustion principale (BK) par l'intermédiaire d'au moins un canal de trop-plein, et
au moins un turbocompresseur à gaz d'échappement (200) qui présente une turbine (201) pour la détente des gaz d'échappement (F_{A}) quittant l'au moins un cylindre (Z) et un compresseur (202) pour la compression de l'air frais (F_{F}) ou un mélange air frais/gaz d'échappement (F_{F}/F_{A}) à alimenter à l'au moins un cylindre (Z) sous forme d'air de suralimentation comprimé (F_{L}), dans lequel une ligne d'air de suralimentation de chambre de combustion (II-1) pour l'alimentation de la chambre de combustion principale (BK), et une ligne de balayage de préchambre (II-2) pour l'alimentation de la préchambre (VK ; II-2), dérivée au niveau d'un point de prélèvement (II-E', II-E", II-E‴) sont formées dans une ligne d'air de suralimentation (II) en aval du compresseur (202), dans lequel en aval du compresseur (202) du turbocompresseur à gaz d'échappement (200) en amont du point de prélèvement (II-E', II-E", II-E‴), au moins un refroidisseur d'air de suralimentation (LK1, LK2) pour le refroidissement de l'air de suralimentation (FL) est disposé dans la ligne d'air de suralimentation (II),
**caractérisé en ce**
**qu'**en aval du point de prélèvement (II-E', II-E", II-E‴) dans la ligne d'air de suralimentation de chambre de combustion (II-1), une turbine à air (211) est disposée, dans laquelle l'air frais (F_{F}) ou également un mélange d'air frais/gaz d'échappement (F_{F}/F_{A}), qui est comprimé davantage dans le turbocompresseur à gaz d'échappement (201, 202) que ce qui est nécessaire pour le remplissage des cylindres (Z) de la chambre de combustion principale (BK), est détendu.

2. Moteur à combustion (1) selon la revendication 1,
**caractérisé en ce qu'**avant le point de prélèvement (II-E'), sont disposés un premier refroidisseur d'air de suralimentation (LK1) et un autre compresseur (210) d'une unité turbines à air-compresseur (211, 210) ainsi qu'un autre refroidisseur d'air de suralimentation (LK2), dans lequel la turbine à air (211) est disposée en aval du point de prélèvement (II-E') dans la ligne d'air de suralimentation de chambre de combustion (II-1).

3. Moteur à combustion (1) selon la revendication 1,
**caractérisé en ce qu'**en amont du point de prélèvement (II-E"), est disposé un premier refroidisseur d'air de suralimentation (LK1) et en aval du point de prélèvement (II-E") dans la ligne d'air de suralimentation de chambre de combustion (II-1) est disposée une turbine à air (211).

4. Moteur à combustion (1) selon la revendication 1,
**caractérisé en ce qu'**en amont du point de prélèvement (II-E‴) est disposé un premier refroidisseur d'air de suralimentation (LK1) et en aval du point de prélèvement (II-E") est disposé une unité turbines à air-compresseur (201, 211), dans lequel les turbines à air (211) sont disposées en aval du point de prélèvement (II-E‴) dans la ligne d'air de suralimentation de chambre de combustion (II-1) et le compresseur (210) est disposé en aval du point de prélèvement (II-E') dans la ligne de balayage de préchambre en dérivation (II-2).

5. Moteur à combustion (1) selon la revendication 1,
**caractérisé en ce qu'**en aval du point de prélèvement (II-E', II-E", II-E‴) dans la ligne de balayage de préchambre (II-2), est/sont disposés un clapet anti-retour (301) ou un clapet anti-retour (301) et un réservoir tampon (302).

6. Moteur à combustion (1) selon les revendications 3 et 5 ou 4 et 5, **caractérisé en ce qu'**en aval du point de prélèvement (II-E", II-E‴) dans la ligne de balayage de préchambre (II-2), est disposé un second refroidisseur d'air de suralimentation (LK2).

7. Moteur à combustion (1) selon la revendication 1, **caractérisé en ce que** dans la ligne de balayage de préchambre (II-2), un point d'alimentation (II-2Z) d'une conduite d'alimentation en carburant (V) pour l'alimentation en carburant (K) le fluide de balayage (F_{L}-2) est disposé, dans lequel dans la ligne de balayage de préchambre (II-2) de l'air frais (F_{F}) ou un mélange d'air frais/gaz d'échappement (F_{F}/F_{A}) se trouve au niveau du point d'alimentation (II-2Z) de la conduite d'alimentation en carburant (V).

8. Procédé pour le fonctionnement d'un moteur à combustion (1), qui comprend au moins un cylindre (Z), dans lequel l'au moins un cylindre (Z) présente une chambre de combustion principale (BK) pour la combustion d'un mélange carburant/air (K/F_{L}) ou d'un mélange carburant/air/gaz d'échappement (K/F_{F}/F_{A}) et comprend une préchambre balayée et liée de manière fluidique à la chambre de combustion principale (BK) par l'intermédiaire d'au moins un canal de trop-plein, et l'au moins un turbocompresseur à gaz d'échappement (200), qui présente une turbine (201) pour la détente de gaz d'échappement (F_{A}) quittant l'au moins un cylindre (Z) et un compresseur (202) pour la compression de l'air frais (F_{F}) ou un mélange air frais/gaz d'échappement (F_{F}/F_{A}) à alimenter à l'au moins un cylindre (Z) sous forme d'air de suralimentation comprimé (F_{L}), dans lequel une ligne d'air de suralimentation de chambre de combustion (II-1) pour l'alimentation de la chambre de combustion principale (BK), et une ligne de balayage de préchambre (II-2) pour l'alimentation de la préchambre (VK ; II-2) dérivée au niveau d'un point de prélèvement (II-E', II-E", II-E‴) sont formées dans une ligne d'air de suralimentation (II) en aval du compresseur (202), de telle sorte que la chambre de combustion principale (BK) reçoit une première quantité partielle d'air de suralimentation refroidi (F_{L}-1) et la préchambre (VK) reçoit une seconde quantité partielle d'air de suralimentation refroidi (F_{L}-2), **caractérisé en ce**
**qu'**une pression de préchambre supérieure par rapport à une pression de chambre de combustion est générée dans la préchambre (VK) par un refroidissement turbo, dans lequel l'air frais (F_{F}) ou un mélange air frais/gaz d'échappement (F_{F}/F_{A}) est comprimé davantage dans le turbocompresseur à gaz d'échappement (201, 202) que ce qui est nécessaire pour le remplissage des cylindres (Z) de la chambre de combustion principale (BK), après quoi l'air frais (F_{F}) ou également le mélange air frais/gaz d'échappement (F_{F}/F_{A}) est refroidi par au moins un refroidisseur d'air de suralimentation (LK1, LK2), dans lequel l'air frais (F_{F}) ou le mélange air frais/gaz d'échappement (F_{F}/F_{A}) est prélevé, sous forme de seconde quantité partielle d'air de suralimentation (F_{L}-2) à partir du niveau de pression de la pression de préchambre supérieure, au niveau du point de prélèvement (II-E', II-E", II-E‴) pour l'alimentation de la préchambre (VK) en fluide de balayage comprimé et refroidi (F_{F}; F_{F}/F_{A} ; K/F_{F} ; K/F_{F}/F_{A}), alors que la première quantité partielle d'air de suralimentation (F_{L}-1) pour l'alimentation de la chambre de combustion principale (BK) est détendue par l'intermédiaire d'une turbine à air (211) en aval du point de prélèvement (II-E', II-E", II-E‴) dans la ligne d'air de suralimentation de chambre de combustion (II-1), moyennant quoi la température et la pression de l'air frais (F_{F}) ou du mélange air frais/gaz d'échappement (F_{F}/F_{A}) sont réduites par rapport à l'air frais (F_{F}) ou au mélange air frais/gaz d'échappement (F_{F}/F_{A}) dans la seconde ligne de balayage de préchambre (II-2).

9. Procédé selon la revendication 8, **caractérisé en ce que** la première quantité partielle d'air de suralimentation refroidi (F_{L}-1) pour l'alimentation de la chambre de combustion principale (BK) est détendue dans une turbine à air (211).

10. Procédé selon la revendication 8, **caractérisé en ce que** la seconde quantité partielle d'air de suralimentation refroidi (FL-2) pour l'alimentation de la préchambre (VK ; II-2) est comprimée dans un autre compresseur (211).

11. Procédé selon la revendication 10, **caractérisé en ce que** de l'air frais (F_{F}) est alimenté au compresseur (202) du turbocompresseur à gaz d'échappement (210, 202) à partir d'une ligne d'air frais (I) disposée en amont, de telle sorte que de l'air frais (F_{F}) est alimenté à la ligne d'air de suralimentation de chambre de combustion (II-1) pour l'alimentation de la chambre de combustion principale (BK) et à la ligne de balayage de préchambre (II-2) pour le balayage de la préchambre (VK).

12. Procédé selon la revendication 10, **caractérisé en ce qu'**un mélange air frais/gaz d'échappement est alimenté au compresseur (202) à partir d'une ligne d'air frais (I) disposée en amont, étant donné que la ligne d'air frais (I) est reliée à une ligne de retour de gaz d'échappement (IV) d'une ligne de gaz d'échappement (III) en amont du compresseur (202), de sorte qu'un mélange air frais/gaz d'échappement (F_{F}/F_{A}) est alimenté à la ligne d'air de suralimentation de chambre de combustion (II-1) pour l'alimentation de a chambre de combustion principale (BK) et à la ligne de balayage de préchambre (II-2) pour le balayage de la préchambre (VK).

13. Procédé selon au moins l'une des revendications 11 ou 12,
**caractérisé en ce que** du carburant (K) est alimenté à l'air de suralimentation comprimé (F_{L}), en particulier l'air frais (F_{F}) ou le mélange air frais/gaz d'échappement (F_{F}/F_{A}) dans la ligne de balayage de préchambre (II-2) en aval du point de prélèvement (II-E', II-E", II-E‴) en fonction des besoins, de telle sorte que l'au moins une préchambre (VK) est balayée avec un mélange carburant/air frais (K/F_{F}) ou un mélange carburant/air/gaz d'échappement (K/F_{F}/F_{A}).
